# EUROPÄISCHE PATENTSCHRIFT

(11) **EP 3 830 449 B1**
(45) Veröffentlichungstag und Bekanntmachung des Hinweises auf die Patenterteilung: **06.09.2023**
(21) Anmeldenummer: 19745049.7
(22) Anmeldetag: 19.07.2019
(51) Int. Cl.: F16H 57/021, F16H 57/023

(54) **GETRIEBE UND VERFAHREN ZUM HERSTELLEN EINER ERSTEN ODER EINER ZWEITEN VARIANTE EINES GETRIEBES**
TRANSMISSION AND METHOD FOR MANUFACTURING A FIRST OR A SECOND VARIANT OF A TRANSMISSION
TRAIN D'ENGRENAGES ET PROCÉDÉ DE FABRICATION D'UNE PREMIÈRE OU D'UNE DEUXIÈME VARIANTE D'UN TRAIN D'ENGRENAGES

(30) Priorität: 30.07.2018 DE 102018005933
(43) Veröffentlichungstag der Anmeldung: 09.06.2021
(73) Patentinhaber: SEW-EURODRIVE GmbH & Co. KG, 76646 Bruchsal (DE)
(72) Erfinder: MORITZ, Thorsten, 76698 Ubstadt-Weiher (DE); WIECZOREK, Dorothee, 74015 Bretten (DE)
(86) Internationale Anmeldenummer: PCT/EP2019/025240
(87) Internationale Veröffentlichungsnummer: WO 2020/025165

(56) Entgegenhaltungen:
- DE-A1- 10 331 348
- DE-A1-102005 021 865
- DE-A1-102012 006 790
- DE-C1- 19 710 557
- DE-U1-202012 009 415
- US-A- 1 492 380
- US-A1- 2010 307 270

## Beschreibung

Die Erfindung betrifft ein Getriebe und ein Verfahren zum Herstellen einer ersten oder einer zweiten Variante eines Getriebes.

Es ist allgemein bekannt, dass ein Getriebe ein Gehäuseteil aufweist, in welchem eine Lageraufnahme vorgesehen ist.

Aus der US 1 492 380 A ist als nächstliegender Stand der Technik ein Fahrzeugantrieb bekannt.

Aus der DE 20 2012 009415 U1 ist ein Industriegetriebe bekannt.

Aus der DE 10 2012 006790 A1 ist ein Getriebe mit einem ersten und einem zweiten Gehäuseteil bekannt.

Aus der US 2010 / 307270 A1 ist ein hocheffizientes Winkelgetriebe bekannt.

Aus der DE 197 10 557 C1 ist ein Aggregat mit einem Elektormotor und mit einem Schneckengetriebe bekannt.

Aus der DE 10 2005 021 865 A1 ist ein Gehäuse für ein stufenloses Automatgetriebe bekannt.

Aus der DE 103 31 348 A1 ist eine Lagereinheit bekannt.

Der Erfindung liegt daher die Aufgabe zugrunde, ein Getriebe einfach und kostengünstig herstellbar weiterzubilden.

Erfindungsgemäß wird die Aufgabe bei dem Getriebe nach den in Anspruch 1 und bei dem Verfahren nach den in Anspruch 11 angegebenen Merkmalen gelöst.

Wichtige Merkmale der Erfindung bei dem Getriebe mit einem Gehäuseteil sind, dass das Gehäuseteil eine Zwischenwand aufweist,
wobei die Zwischenwand zwei gleichartig ausgeformte Aufnahmen aufweist,
wobei in einer der beiden Aufnahmen eine Buchse angeordnet, insbesondere aufgenommen, insbesondere eingepresst angeordnet, ist.

Von Vorteil ist dabei, dass nur in einer einzigen der beiden Aufnahmen eine Buchse angeordnet ist, die andere ist also frei. Da beide Aufnahmen denselben Durchmesser aufweisen und/oder gleichartig geformt sind, ermöglicht somit ein wahlweises Verwenden der Aufnahmen zur Aufnahme der Buchse die Herstellung einer jeweiligen Variante.

Bei einer vorteilhaften Ausgestaltung ist die Zwischenwand zwischen der eintreibenden Welle, insbesondere Rotorwelle eines das Getriebe antreibenden Elektromotors, und der abtreibenden

Welle des Getriebes angeordnet. Von Vorteil ist dabei, dass die Zwischenwand eine erhöhte Stabilität bewirkt und trotzdem ein Durchfluss von Öl ermöglicht ist, insbesondere auch dann, wenn eine Buchse in die Aufnahme eingesetzt ist. Denn die Buchse weist axial durchgehende Ausnehmungen auf.

Bei einer vorteilhaften Ausgestaltung sind beide Aufnahmen fein bearbeitet, insbesondere mit Schleifen bearbeitet. Von Vorteil ist dabei, dass wegen des hohen Bearbeitungsaufwands ermöglicht ist, dass nur eine Sorte Gehäuseteile zu bevorraten sind, damit bei der Herstellung durch wahlweises Einführen der Buchse in die jeweilige Aufnahme die jeweilige Variante herstellbar ist.

Bei einer vorteilhaften Ausgestaltung ist
die Buchse als ringartiges Hohlteil ausgeführt. Von Vorteil ist dabei, dass die Masse der Buchse gering ist und an der radialen Innenseite der Buchse Lager aufnehmbar sind.

Bei einer vorteilhaften Ausgestaltung sind in der Buchse ein erstes Lager und ein zweites Lager aufgenommen,
wobei eine Welle mittels des ersten und zweiten Lagers drehbar gelagert ist,
insbesondere wobei das erste Lager einen größeren Außendurchmesser aufweist als das zweite Lager, wobei das erste Lager axial weiter von der eintreibenden Welle entfernt angeordnet ist als das zweite Lager. Von Vorteil ist dabei, dass eine schnelle Herstellung ermöglicht ist, da die beiden Lager samt Welle in der Buchse vorkomplettierbar vorsehbar sind.

Bei einer vorteilhaften Ausgestaltung weist die Welle eine Verzahnung auf, welche mit der Verzahnung eines Tellerrades im Eingriff ist,
wobei das Tellerrad entweder als Abtriebsrad, insbesondere also drehfest mit der abtreibenden Welle verbunden ist, fungiert oder drehfest mit einer Zwischenwelle verbunden ist, welche auf der von der eintreibenden Seite abgewandten Seite der Zwischenwand angeordnet ist. Von Vorteil ist dabei, dass das Tellerrad auf seiner Planseite verzahnt ist und somit eine Winkelstufe realisierbar ist.

Bei einer vorteilhaften Ausgestaltung ist eine mit der Zwischenwelle drehfest verbundene Verzahnung im Eingriff mit der Verzahnung des Abtriebsrads. Von Vorteil ist dabei, dass eine einfache Herstellung durch direktes Aufbringen der Verzahnung auf die Welle ermöglicht ist. Alternativ ist die Verzahnung auch auf einem Aufsteckritzel oder Einsteckritzel aufbringbar, welches drehfest mit der Zwischenwelle verbunden ist.

Bei einer vorteilhaften Ausgestaltung ist die Rotorwelle mit einer Verzahnung, insbesondere eines Aufsteckritzels, drehfest verbunden, welche mit der Verzahnung eines mit der Welle drehfest verbundenen Zahnrades im Eingriff ist. Von Vorteil ist dabei, dass eine einfache Herstellung ermöglicht ist.

**Erfindungsgemäß** weist die Buchse axial durchgehende Ausnehmungen auf,
welche in Umfangsrichtung voneinander regelmäßig beabstandet sind und/oder welche alle auf dem selben Radialabstand angeordnet sind. Von Vorteil ist dabei, dass Masse einsparbar ist, ein Öldurchfluss ermöglicht ist und somit auch eine gleichmäßige Temperaturverteilung erreichbar ist.

Bei einer vorteilhaften Ausgestaltung ist jede der Ausnehmungen mit zunehmendem axialen Abstand zur eintreibenden Welle verjüngt ausgeformt,
insbesondere jede der Ausnehmungen mit zunehmendem axialen Abstand zur eintreibenden Welle einen monoton abnehmenden Querschnitt aufweist, insbesondere wobei die Normalenrichtung der Querschnittsfläche für den Querschnitt parallel zur Drehachse der Welle und/oder der eintreibenden Welle ausgerichtet ist. Von Vorteil ist dabei, dass ein Düseneffekt erreichbar ist. Insbesondere tritt das beim großen Querschnitt eintretende Medium, insbesondere Luft oder Öl, schneller aus dem kleineren Querschnitt aus. Da die Mündungsöffnung horizontal gerichtet ist, sind bei höherer Geschwindigkeit von Öltröpfchen weiter entfernt liegende Positionen erreichbar.

Bei einer vorteilhaften Ausgestaltung steigt der Radialabstand, insbesondere bezogen auf die Drehachse der Welle, jeder der Ausnehmungen mit zunehmendem axialen Abstand zur eintreibenden Welle monoton an. Von Vorteil ist dabei, dass der größere Radialabstand die Aufnahme des ersten Lagers, also des größeren Lagers ermöglicht.

Bei einer vorteilhaften Ausgestaltung weist das Getriebe ein Deckelteil auf, welches eine Öffnung des Gehäuseteils verschließt,
wobei das Deckelteil an seiner Innenseite ausgebuchtet ausgeformt ist und/oder eine konkave Ausnehmung aufweist, in welche ein Abtriebsrad teilweise hineinragt, wenn die Buchse in der zweiten Aufnahme aufgenommen ist. Von Vorteil ist dabei, dass stets dasselbe Deckelteil verwendbar und im Lager bevorratbar ist.

Wichtige Merkmale bei dem Verfahren zum Herstellen einer ersten oder einer zweiten Variante eines Getriebes sind, dass eine Buchse wahlweise in eine erste oder in eine zweite Aufnahme eingeführt wird,

insbesondere also zur Herstellung der ersten Variante in eine erste der Aufnahmen und zur Herstellung der zweiten Variante in eine zweite der Aufnahmen eingeführt wird. Von Vorteil ist dabei, dass durch einfaches Auswählen verschiedene Varianten herstellbar sind.

Bei einer vorteilhaften Ausgestaltung wird eine Öffnung des Gehäuseteils mittels eines Deckelteils verschlossen,
wobei das Deckelteil an seiner Innenseite eine Ausnehmung oder Vertiefung aufweist, in welche das als Abtriebsrad fungierende Verzahnungsteil teilweise hineinragt. Von Vorteil ist dabei, dass bei einer ersten Variante das Abtriebsrad ausreichend Platz findet und bei der anderen Variante kein Verzahnungsteil in die Vertiefung hineinragt und somit mehr Öl vorsehbar ist, so dass eine verbesserte Temperierung des Getriebes erreichbar ist, insbesondere und/oder Wärmeaufspreizung verbesserbar ist.

Bei einer vorteilhaften Ausgestaltung wird eine eintriebsseitige Öffnung des Gehäuseteils mittels eines Flanschteils verschlossen, welches einen Wellendichtring aufnimmt, welcher die eintreibende Welle, insbesondere Rotorwelle eines das Getriebe antreibenden Elektromotors, zum Flanschteil hin abdichtet. Von Vorteil ist dabei, dass eine hohe Schutzart erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein Querschnitt durch ein erstes erfindungsgemäßes Getriebe einer Baureihe von Getrieben dargestellt.
In der Figur 2 ist ein Querschnitt durch ein zweites erfindungsgemäßes Getriebe der Baureihe von Getrieben dargestellt.

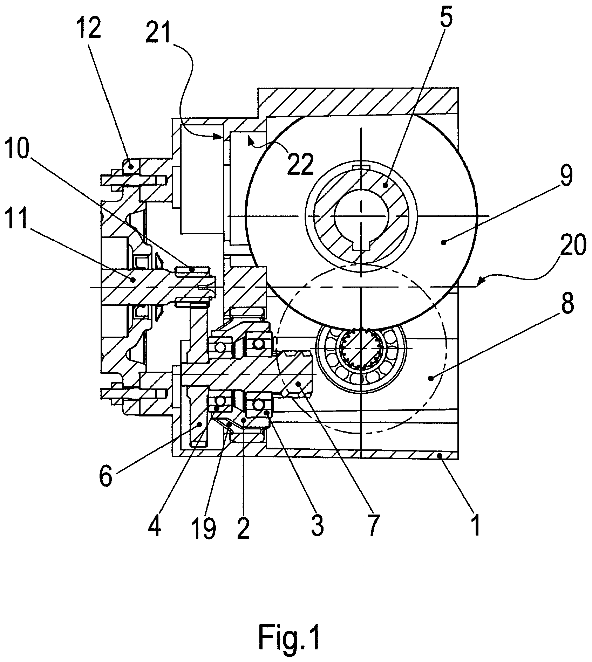

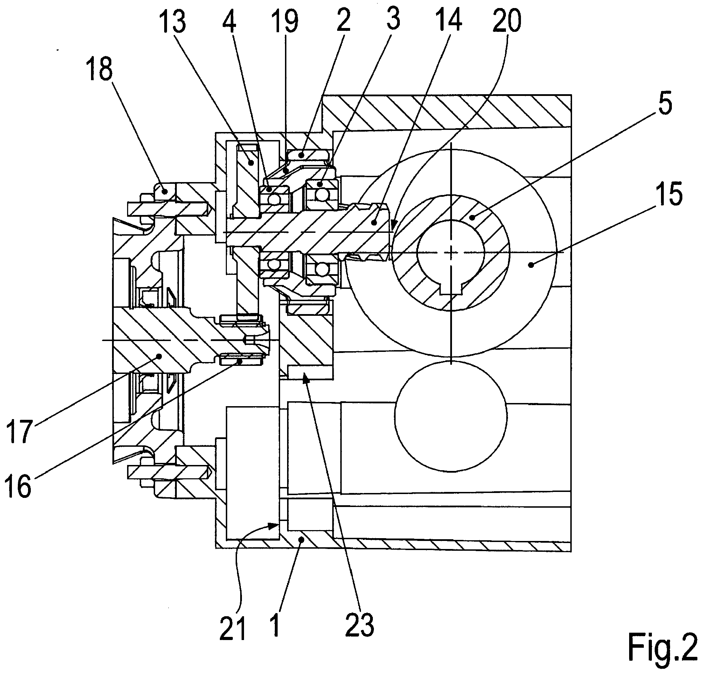

Die Baureihe weist also zwei verschiedene Varianten von Getrieben auf, wie beispielhaft in Figur 1 und Figur 2 gezeigt. Dabei werden beim Herstellen aus einer Menge von Teilen Teile ausgewählt und in ein Gehäuseteil 1 eingebaut, wobei ein erstes Teil wahlweise an eine erste oder an eine zweite Position eingebaut wird, so dass die verschiedenen Varianten erzeugbar sind.

Wie in Figur 1 dargestellt, weist das Gehäuseteil 1 des Getriebes eine erste Aufnahme 23 für eine Buchse 2 auf. Zwar ist eine gleichartig geformte und auch fein bearbeitete zweite Aufnahme 22 vorhanden, jedoch ist diese unbesetzt.

Im Unterschied zur Variante nach Figur 1 wird bei der Variante nach Figur 2 die Buchse 2 in der zweiten Aufnahme 22 aufgenommen.

Wie in Figur 1 gezeigt, sind in der Buchse 2 ein erstes Lager 3 und ein zweites Lager 4 aufgenommen, welche eine Welle 7 mit Verzahnung, insbesondere Ritzelwelle, drehbar lagern.

Die Verzahnung der Welle 7 steht im Eingriff mit einem Tellerrad 8, so dass eine Winkelgetriebestufe gebildet ist. Das Tellerrad 8 ist auf einer Zwischenwelle angeordnet und mit dieser drehfest verbunden. Die Zwischenwelle ist im Eingriff mit einem Zahnrad 9, das als Abtriebsrad fungiert.

Die Welle 7 ist drehfest verbunden mit einem Zahnrad 6, welches mit einem Aufsteckritzel 10 im Eingriff ist, das drehfest mit einer Rotorwelle 11 eines Elektromotors verbunden ist.

Der Elektromotor ist nicht vollständig gezeigt, wobei sein Gehäuse über ein Flanschteil 12 mit dem Gehäuseteil 1 des Getriebes verbunden ist.

Somit treibt der Elektromotor eine erste Stirnradstufe an, welche eine Winkelgetriebestufe antreibt, die wiederum eine abtriebsseitige Stirnradgetriebestufe antreibt.

Das Getriebe ist mit Öl bis zu einem Ölpegel 20 befüllt, welcher die Drehachse der Rotorwelle 11 markiert.

Die Buchse 2 hat axial, insbesondere also parallel zur Drehachse der Rotorwelle 11 und parallel zur Drehachse der Welle 7, durchgehende Ausnehmungen.

Das erste Lager 3 ist größer als das zweite Lager 4, welches auf der vom Tellerrad 8 abgewandten Seite der Buchse 2 angeordnet ist. Somit ist also der Außendurchmesser des ersten Lagers 3 größer als der Außendurchmesser des zweiten Lagers 4.

Die Welle 7 ist daher mit einem Absatz ausgeführt, da der Innendurchmesser des zweiten Lagers 4 kleiner ist als der Innendurchmesser des ersten Lagers 3.

Das Aufsteckritzel 10 ist geradverzahnt oder schrägverzahnt ausführbar.

Die Verzahnung der Welle 7 ist im Eingriff mit der Verzahnung des Tellerrades 8. Das Tellerrad weist auf seiner planen Seite eine Verzahnung auf. Die Drehachse der Welle 7 weist einen Abstand auf zur Drehachse des Tellerrades 8, insbesondere schneiden sich also diese beiden Drehachsen nicht. Die Drehachse der Welle 7 ist in einer Ebene angeordnet, deren Normalenrichtung parallel zur Drehachse des Tellerrades 8 ist.

Der Abstand ist kleiner als der Außenradius der Verzahnung des Tellerrades 8, insbesondere liegt der Abstand im Bereich zwischen einem Fünftel des Außenradius der Verzahnung des Tellerrades 8 und vier Fünfteln des Außenradius der Verzahnung des Tellerrades 8.

Das Abtriebsrad 9 ist vorzugsweise als schrägverzahntes Stirnrad ausgeführt, kann aber auch geradverzahnt ausgeführt werden.

Die Zwischenwand 21 trennt den eintreibenden vom abtreibenden Raumbereich des Getriebes. Da jedoch die beiden durch die Zwischenwand 21 durchgehenden Aufnahmen 22 und 23 in der Zwischenwand angeordnet sind und nur eine der beiden Ausnehmungen 22 mit der Buchse 2 verschlossen ist, ist ein Austausch von Schmieröl zwischen den beiden Raumbereichen im Ruhezustand oder bei sehr langsamer Drehzahl nicht durch die unbesetzte Ausnehmung 23 hindurch ermöglicht. Erst bei hoher Drehzahl und die dadurch bewirkte Schaumbildung ist ein gewisser Austausch von Öl ermöglicht.

Denn der Ölpegel 20 ist nur im Ruhezustand des Getriebes unterhalb der unbesetzten Ausnehmung 22.

Die axial durch die Buchse 2 durchgehenden Ausnehmungen 19 hingegen ermöglichen einen Öldurchfluss zwischen den beiden Raumbereichen.

Die Ausnehmungen 19 sind in Umfangsrichtung voneinander regelmäßig beabstandet. Jede der Ausnehmungen 19 ist axial durchgehend durch die Buchse 2 ausgebildet.

Der Querschnitt jeder Ausnehmung 19 verjüngt sich monoton mit abnehmendem axialen Abstand zur Verzahnung der Welle 7.

Somit nimmt also die Querschnittsfläche der jeweiligen Ausnehmung 19, insbesondere die in einer Querschnitts-Ebene, deren Normalenrichtung parallel zur Drehachse der Welle 7 ausgerichtet ist, gemessen wird, mit abnehmendem axialen Abstand zur Verzahnung 7 ab.

Außerdem nimmt der radiale Abstand jeder Ausnehmung 19 zur Drehachse der Welle 7 mit abnehmendem axialen Abstand zur Verzahnung 7 monoton zu.

Jede der Ausnehmungen 19 ist radial, insbesondere bezogen auf die Drehachse der Welle 7, außerhalb des ersten Lagers 3 und des zweiten Lagers 4 angeordnet.

Die in der Zwischenwand 21 angeordneten Aufnahmen 22 und 23 sind jeweils als durch die Zwischenwand durchgehende Stufenbohrungen ausgeführt und fein bearbeitet, wobei der lichte Innendurchmesser der Stufenbohrung in axialer Richtung, also in Richtung der Drehachse der Welle 7, bei entfernter Buchse 2, den Lagern (3, 4) und der Welle 7 monoton abnimmt mit abnehmendem axialen Abstand zur eintreibenden Welle, insbesondere Rotorwelle 17, hin.

Bei Betrieb des Getriebes findet ein Ölaustausch durch die Ausnehmungen 19 statt, weil die Ausnehmungen 19 an der Buchse 2 jeweils auf demselben Radialabstand angeordnet sind, wobei sie in Umfangsrichtung voneinander regelmäßig beabstandet sind.

Auf diese Weise wird das bei Betrieb des Getriebes vom Zahnrad 6 mitbewegte Öl zumindest teilweise durch erste Ausnehmungen 19, insbesondere im unteren Bereich der Buchse 2 angeordnete Ausnehmungen 19, zum abtriebsseitigen Raumbereich hingedrückt und durch zweite Ausnehmungen 19, insbesondere im oberen Bereich der Buchse 2 angeordnete Ausnehmungen 19 zurückgefördert.

Durch die zum abtriebsseitigen Raumbereich hin gerichtete Verjüngung der Ausnehmungen 19, insbesondere der ersten Ausnehmungen 19 wird das durch die erste Ausnehmungen 19 in den zweiten Raumbereich eingeleitete Öl mit entsprechend der Verjüngung erhöhter Geschwindigkeit eingeleitet, wodurch auch das im abtriebsseitigen Raumbereich befindliche Öl bewegt wird. Dies trägt zu einer gleichmäßigeren Temperaturverteilung im abtriebsseitigen Raumbereich bei.

Wie in Figur 2 gezeigt, ist im Unterschied zu Figur 1 die Buchse 2 statt in der Aufnahme 23 in der Aufnahme 22 angeordnet, so dass die Verzahnung der Welle 14, welche der Welle 7 in Figur 1 entspricht, mit dem Tellerrad 15, welches dem Tellerrad 8 der Figur 1 entspricht, im Eingriff ist.

Da das Tellerrad 15 der Figur 2 nun drehfest mit der Abtriebswelle 5 verbunden ist, ist das Getriebe nach Figur 2 nur zweistufig ausgeführt. Hingegen ist das Getriebe nach Figur 1 dreistufig ausgeführt.

Zwar ist beim Getriebe nach Figur 2 die Aufnahme 22 mit der Buchse 2 samt Lagern 3 und 4 sowie Welle 14 belegt, aber trotzdem ist ein Luftaustausch zwischen dem eintriebsseitigen und abtriebsseitigen Raumbereich mittels der Ausnehmung 19 der Buchse 2 ermöglicht, die über dem Ölpegel liegen, welcher bevorzugt bis zur Drehachse der eintreibenden Welle, insbesondere Rotorwelle 17, reicht.

Außerdem wird ein Ölkreisstrom bei Betrieb des Getriebes in Bewegung gesetzt, der einerseits durch die unterhalb des Ölpegels liegenden Ausnehmungen 19 führt und andererseits durch die unbesetzte Aufnahme 23.

Die in Figur 1 und Figur 2 gezeigten Aufnahmen 22 und 23 sind beide fein bearbeitet, insbesondere also auch geschliffen. Diese Feinbearbeitung ist also auch in der jeweils mit keiner Buchse 2 belegten Aufnahme (22, 23) ausgeführt. Zwar ist dies ein Zusatzaufwand, bewirkt aber den Vorteil, dass nur ein einziges Gehäuseteil 1 im Lager zu bevorraten ist und bei der Herstellung dann zur Herstellung der Variante nach Figur 1 und auch zur Herstellung der Variante nach Figur 2 verwendbar ist.

Die Varianten unterscheiden sich wesentlich in der Auswahl derjenigen Aufnahme (22, 23), in welche die Buchse 2 dann eingesteckt oder eingepresst wird. Insbesondere sind die Verzahnungen der verzahnte Teil jeweils entsprechend der gewünschten Übersetzung des Getriebes ausgewählt und daher in Figur 2 und Figur 1 jeweils unterschiedlich oder gleich.

Die in Figur 2 verwendete Rotorwelle 17 mit Aufsteckritzel 16 korrespondiert mit der Rotorwelle 11 mit Aufsteckritzel 10. Ebenso korrespondiert das Flanschteil 18 aus Figur 2 mit dem Flanschteil 12 aus Figur 1.

In Figur 1 ist das Gehäuseteil 1 an der von der Rotorwelle 11 abgewandten Seite offen, so dass die Buchse 2 und die Verzahnungsteile (7, 8, 9) durch diese offene Seite in den abtriebsseitigen Raumbereich einführbar sind und dort montierbar sind.

Das Getriebe weist ein Deckelteil auf, welches in Figur 1 nicht gezeigt ist und die offene Seite verschließt, Da aber das Abtriebsrad 9 in Figur 1 etwas aus der offenen Seite hervorragt, ist das Deckelteil an seiner Innenseite, also an seiner dem abtriebsseitigen Raumbereich zugewandten Seite ausgebuchtet ausgeführt. Auf diese Weise sind Kollisionen vermeidbar.

Das Deckelteil wird aber auch in Figur 2 zum Verschließen der selben offenen Seite verwendet. Die Ausbuchtung bewirkt somit eine weniger kompakte Ausführung des Getriebes als bei einem möglichst kompakten Verschließen der offenen Seite ermöglicht wäre. Die Verwendung desselben Deckelteils bei beiden Varianten bewirkt aber wiederum den Vorteil der geringeren Lagerkosten und Verwaltungskosten, da nur ein Deckelteil, insbesondere also nur eine einzige Sorte von Deckelteilen, zu bevorraten ist.

Außerdem sind bei beiden Varianten auf diese Weise die äußeren Abmessungen des Getriebes die selben, obwohl eine zweistufige oder eine dreistufige Variante als Getriebe bereitstellbar ist.

Wie in Figur 1 und 2 gezeigt ist die eintriebsseitige Öffnung des Gehäuseteils 1 mittels des Flanschteils (12, 18) verschlossen, welches einen Wellendichtring aufnimmt, welcher die eintreibende Welle, insbesondere Rotorwelle (11, 17) eines das Getriebe antreibenden Elektromotors, zum Flanschteil (12, 18) hin abdichtet.

Vorzugsweise ist in Figur 2 der Abstand der Drehachse der Welle 14 zur Drehachse der Abtriebswelle 5 derselbe wie der Abstand der Drehachse der Welle 7 zur Drehachse des Tellerrades 8 in Figur 1.

Bei weiteren erfindungsgemäßen Ausführungsbeispielen werden als korrespondierende Teile die selben Teile verwendet.

### Bezugszeichenliste

1 Gehäuseteil
2 Buchse
3 erstes Lager
4 zweites Lager
5 Abtriebswelle
6 Zahnrad
7 Welle mit Verzahnung, insbesondere Ritzelwelle
8 Tellerrad
9 Zahnrad, insbesondere Abtriebsrad
10 Aufsteckritzel
11 Rotorwelle
12 Flanschteil
13 Zahnrad
14 Welle mit Verzahnung, insbesondere Ritzelwelle
15 Tellerrad
16 Aufsteckritzel
17 Rotorwelle
18 Flanschteil
19 Ausnehmung
20 Ölpegel
21 Zwischenwand
22 zweite Aufnahme für Buchse 2
23 erste Aufnahme für Buchse 2

## Patentansprüche

1. Getriebe mit einem Gehäuseteil (1),
wobei das Gehäuseteil (1) eine Zwischenwand (21) aufweist,
wobei die Zwischenwand (21) zwei gleichartig ausgeformte Aufnahmen (22, 23) aufweist, wobei in einer der beiden Aufnahmen (22, 23) eine Buchse (2) angeordnet, ist,
**dadurch gekennzeichnet, dass**
die Buchse (2) axial durchgehende Ausnehmungen (19) aufweist,
wobei die axial durchgehenden Ausnehmungen (19) der Buchse (2) in Umfangsrichtung voneinander regelmäßig beabstandet sind und/oder welche alle auf dem selben Radialabstand angeordnet sind,
wobei jede der Ausnehmungen (19) mit zunehmendem axialen Abstand zu einer eintreibenden Welle (11,17) verjüngt ausgeformt ist.

2. Getriebe nach Anspruch 1,
**dadurch gekennzeichnet, dass**
die Zwischenwand (21) zwischen der eintreibenden Welle, und der abtreibenden Welle des Getriebes angeordnet ist.

3. Getriebe nach einem der vorangegangenen Ansprüche,
**dadurch gekennzeichnet, dass**
beide Aufnahmen (22, 23) fein bearbeitet sind,

4. Getriebe nach einem der vorangegangenen Ansprüche,
**dadurch gekennzeichnet, dass**
die Buchse (2) als ringartiges Hohlteil ausgeführt ist.

5. Getriebe nach einem der vorangegangenen Ansprüche,
**dadurch gekennzeichnet, dass**
in der Buchse (2) ein erstes Lager (3) und ein zweites Lager (4) aufgenommen sind, wobei eine Welle mittels des ersten und zweiten Lagers drehbar gelagert ist,

6. Getriebe nach einem der vorangegangenen Ansprüche,
**dadurch gekennzeichnet, dass**
die Welle eine Verzahnung aufweist, welche mit der Verzahnung eines Tellerrades (8, 15) im Eingriff ist,
wobei das Tellerrad (8, 15) entweder als Abtriebsrad, fungiert oder drehfest mit einer Zwischenwelle verbunden ist, welche auf der von der eintreibenden Seite abgewandten Seite der Zwischenwand (21) angeordnet ist.

7. Getriebe nach einem der vorangegangenen Ansprüche,
**dadurch gekennzeichnet, dass**
eine mit der Zwischenwelle drehfest verbundene Verzahnung im Eingriff ist mit der Verzahnung des Abtriebsrads.

8. Getriebe nach einem der vorangegangenen Ansprüche,
**dadurch gekennzeichnet, dass**
die Rotorwelle (17) mit einer Verzahnung, drehfest verbunden ist, welche mit der Verzahnung eines mit der Welle drehfest verbundenen Zahnrades im Eingriff ist.

9. Getriebe nach einem der vorangegangenen Ansprüche,
**dadurch gekennzeichnet, dass**
der Radialabstand, jeder der Ausnehmungen (19) mit zunehmendem axialen Abstand zur eintreibenden Welle monoton ansteigt.

10. Getriebe nach einem der vorangegangenen Ansprüche,
**dadurch gekennzeichnet, dass**
das Getriebe ein Deckelteil aufweist, welches eine Öffnung des Gehäuseteils (1) verschließt, wobei das Deckelteil an seiner Innenseite ausgebuchtet ausgeformt ist und/oder eine konkave Ausnehmung (19) aufweist, in welche ein Abtriebsrad teilweise hineinragt, wenn die Buchse (2) in der zweiten Aufnahme (23) aufgenommen ist.

11. Verfahren zum Herstellen einer ersten oder einer zweiten Variante eines Getriebes, nach einem der vorangegangenen Ansprüche,
wobei eine Buchse (2) wahlweise in eine erste oder in eine zweite Aufnahme (22, 23) eingeführt wird,
**dadurch gekennzeichnet, dass**
eine eintriebsseitige Öffnung des Gehäuseteils (1) mittels eines Flanschteils (18) verschlossen wird, welches einen Wellendichtring aufnimmt, welcher die eintreibende Welle, zum Flanschteil (18) hin abdichtet.

12. Verfahren nach Anspruch 11,
**dadurch gekennzeichnet, dass**
eine Öffnung des Gehäuseteils (1) mittels eines Deckelteils verschlossen wird,
wobei das Deckelteil an seiner Innenseite eine Ausnehmung (19) oder Vertiefung aufweist, in welche das als Abtriebsrad fungierende Verzahnungsteil teilweise hineinragt.

## Claims

1. A gear unit with a housing part (1),
wherein the housing part (1) has a partition (21),
wherein the partition (21) has two similarly formed receptacles (22, 23),
wherein a bushing (2) is arranged in one of the two receptacles (22, 23),
**characterised in that**
the bushing (2) has axially uninterrupted cutouts (19),
the axially uninterrupted cutouts (19) of the bushing (2) being regularly spaced apart from each other in the peripheral direction and all being arranged at the same radial distance,
each of the cutouts (19) being formed tapered with increasing axial distance from an input shaft (11, 17).

2. A gear unit according to claim 1,
**characterised in that**
the partition (21) is arranged between the input shaft and the output shaft of the gear unit.

3. A gear unit according to one of the preceding claims,
**characterised in that**
both receptacles (22, 23) are fine-machined.

4. A gear unit according to one of the preceding claims,
**characterised in that**
the bushing (2) is embodied as a ring-like hollow part.

5. A gear unit according to one of the preceding claims,
**characterised in that**
a first bearing (3) and a second bearing (4) are accommodated in the bushing (2),
a shaft being rotatably mounted by means of the first and second bearings.

6. A gear unit according to one of the preceding claims,
**characterised in that**
the shaft has gearing which is engaged with the gearing of a ring gear (8, 15),
the ring gear (8, 15) either acting as an output wheel or being connected non-rotatably to an intermediate shaft which is arranged on that side of the partition (21) which faces away from the input side.

7. A gear unit according to one of the preceding claims,
**characterised in that**
gearing connected non-rotatably to the intermediate shaft is engaged with the gearing of the output wheel.

8. A gear unit according to one of the preceding claims,
**characterised in that**
the rotor shaft (17) is connected non-rotatably to gearing which is engaged with the gearing of a gear wheel which is connected non-rotatably to the shaft.

9. A gear unit according to one of the preceding claims,
**characterised in that**
the radial distance of each of the cutouts (19) increases monotonically with increasing axial distance from the input shaft.

10. A gear unit according to one of the preceding claims,
**characterised in that**
the gear unit has a cover part which closes an opening in the housing part (1),
the cover part being formed with a convexity on its inner side and/or having a concave cutout (19) into which an output wheel partially projects if the bushing (2) is accommodated in the second receptacle (23).

11. A method for producing a first or a second variant of a gear unit according to one of the preceding claims,
wherein a bushing (2) is introduced selectively into a first or a second receptacle (22, 23),
**characterised in that**
an input-side opening of the housing part (1) is closed by means of a flange part (18) which accommodates a shaft sealing ring which seals off the input shaft towards the flange part (18).

12. A method according to claim 11,
**characterised in that**
an opening of the housing part (1) is closed by means of a cover part,
the cover part having on its inner side a cutout (19) or depression into which the toothed part which acts as an output wheel partially projects.

## Revendications

1. Transmission munie d'une partie (1) formant carter,
ladite partie (1), formant carter, étant dotée d'une paroi intercalaire (21),
laquelle paroi intercalaire (21) comprend deux logements (22, 23) de configurations de même type,
une douille (2) étant intégrée dans l'un des deux logements (22, 23),
**caractérisée par le fait que**
la douille (2) comporte des évidements (19) ininterrompus dans le sens axial,
lesquels évidements (19) de ladite douille (2), ininterrompus dans le sens axial, sont régulièrement espacés les uns des autres dans la direction du pourtour et sont tous disposés à la même distance radiale,
sachant que chacun desdits évidements (19) présente une configuration s'amenuisant au fur et à mesure de l'accroissement de la distance axiale par rapport à un arbre d'entrée (11,17).

2. Transmission selon la revendication 1,
**caractérisée par le fait que**
la paroi intercalaire (21) est interposée entre l'arbre d'entrée et l'arbre de sortie de ladite transmission.

3. Transmission selon l'une des revendications précédentes,
**caractérisée par le fait que**
les deux logements (22, 23) sont façonnés par usinage de précision.

4. Transmission selon l'une des revendications précédentes,
**caractérisée par le fait que**
la douille (2) est réalisée sous la forme d'une pièce creuse de type annulaire.

5. Transmission selon l'une des revendications précédentes,
**caractérisée par le fait**
**qu'**un premier palier (3) et un second palier (4) sont logés dans la douille (2),
un arbre étant monté à rotation au moyen desdits premier et second paliers.

6. Transmission selon l'une des revendications précédentes,
**caractérisée par le fait que**
l'arbre est pourvu d'une denture en prise avec la denture d'une couronne dentée (8, 15), laquelle couronne dentée (8, 15) remplit la fonction d'un pignon mené ou bien est reliée, avec verrouillage rotatif, à un arbre intermédiaire situé du côté de la paroi intercalaire (21) qui pointe à l'opposé du côté menant.

7. Transmission selon l'une des revendications précédentes,
**caractérisée par le fait**
**qu'**une denture, reliée à l'arbre intermédiaire avec verrouillage rotatif, est en prise avec la denture du pignon mené.

8. Transmission selon l'une des revendications précédentes,
**caractérisée par le fait que**
l'arbre rotorique (17) est relié, avec verrouillage rotatif, à une denture en prise avec la denture d'une roue dentée reliée à l'arbre avec verrouillage rotatif.

9. Transmission selon l'une des revendications précédentes,
**caractérisée par le fait que**
la distance radiale de chacun des évidements (19) croît, de manière monotone, au fur et à mesure de l'accroissement de la distance axiale par rapport à l'arbre d'entrée.

10. Transmission selon l'une des revendications précédentes,
**caractérisée par le fait que**
ladite transmission est nantie d'une partie formant couvercle, qui obture un orifice de la partie (1) formant carter,
laquelle partie formant couvercle est munie, à sa face intérieure, d'une configuration présentant une indentation et/ou comporte un évidement concave (19) dans lequel un pignon mené s'engage, partiellement, lorsque la douille (2) est intégrée dans le second logement (23).

11. Procédé de fabrication d'une première ou d'une seconde variante d'une transmission conforme à l'une des revendications précédentes,
une douille (2) étant sélectivement insérée dans un premier ou dans un second logement (22, 23),
**caractérisé par le fait**
**qu'**un orifice, situé côté entrée de la partie (1) formant carter, est obturé au moyen d'une pièce de bridage (18) recevant une bague d'étanchement qui assure l'étanchéité de l'arbre d'entrée en direction de ladite pièce de bridage (18).

12. Procédé selon la revendication 11,
**caractérisé par le fait**
**qu'**un orifice de la partie (1) formant carter est obturé au moyen d'une partie formant couvercle,
laquelle partie formant couvercle est munie, à sa face intérieure, d'un évidement (19) ou d'un renfoncement dans lequel s'engage, partiellement, la partie dentée remplissant la fonction d'un pignon mené.
